(19) Europäisches Patentamt
European Patent Office
Office européen des brevets

(11) **EP 3 621 444 B1**

(12) **FASCICULE DE BREVET EUROPEEN**

(45) Date de publication et mention
de la délivrance du brevet:
**10.03.2021 Bulletin 2021/10**

(51) Int Cl.:
*A23B 4/09* *(2006.01)*  *A23B 7/055* *(2006.01)*
*A23L 3/36* *(2006.01)*  *A23L 3/375* *(2006.01)*
*A23P 20/15* *(2016.01)*  *A23B 7/04* *(2006.01)*
*A23B 4/06* *(2006.01)*  *A23B 9/10* *(2006.01)*

(21) Numéro de dépôt: **18723369.7**

(22) Date de dépôt: **27.04.2018**

(86) Numéro de dépôt international:
**PCT/FR2018/051069**

(87) Numéro de publication internationale:
**WO 2018/206877 (15.11.2018 Gazette 2018/46)**

(54) **PROCÉDÉ D'ENROBAGE CONTINU DE PRODUITS ALIMENTAIRES, NOTAMMENT SURGELÉS, AVEC CHAUFFAGE MAITRISÉ DE ROTOR(S)**

VERFAHREN ZUR KONTINUIERLICHEN BESCHICHTUNG VON NAHRUNGSMITTELPRODUKTEN, INSBESONDERE GEFRORENE NAHRUNGSMITTELPRODUKTE, MIT GESTEUERTER ROTORHEIZUNG

METHOD FOR THE CONTINUOUS COATING OF FOOD PRODUCTS, IN PARTICULAR FROZEN FOOD PRODUCTS, WITH CONTROLLED ROTOR HEATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.05.2017 FR 1754098**

(43) Date de publication de la demande:
**18.03.2020 Bulletin 2020/12**

(73) Titulaire: **BONDUELLE**
**59173 Renescure (FR)**

(72) Inventeurs:
• **FABOZZI, Salvatore**
**59173 Renescure (FR)**

• **SENECHAL, Sébastien**
**59173 Renescure (FR)**

(74) Mandataire: **Bureau Duthoit Legros Associés**
**31 rue des Poissonceaux**
**CS 40009**
**59044 Lille Cedex (FR)**

(56) Documents cités:
**EP-A1- 0 355 812    EP-A1- 0 893 070**
**FR-A1- 2 789 270    US-A- 5 223 293**
**US-B1- 6 228 172    US-B1- 6 235 330**

**Description**

L'invention est relative à un procédé d'enrobage de produits alimentaires avec une substance (liquide ou pâteuse) qui comporte une ou plusieurs étapes d'apport de frigories pour provoquer le croûtage de la substance d'enrobage autour des produits alimentaires.

Les produits alimentaires peuvent être notamment des légumes, des légumineuses, de la viande, du poisson, des fruits ou des céréales, seuls ou en mélange.

L'invention s'intéresse ici plus particulièrement aux procédés d'enrobage comprenant :

- une étape a) de sous-refroidissement des produits alimentaires par apport de frigories extérieures à une température inférieure à leur température initiale, avant mise en contact des produits alimentaires et de la substance d'enrobage, et ultérieurement,

- une étape b) de mise en contact des produits alimentaires sous-refroidis obtenus à l'étape a) et la substance d'enrobage, l'enrobage autour des produits étant formé à cette étape par la congélation de la dite substance d'enrobage uniquement sous l'action du transfert de frigories des produits alimentaires à la substance d'enrobage, c'est-à-dire sans apport de frigories extérieures.

Le document FR 2789270 A1 divulgue un tel procédé d'enrobage pour lesquelles les étapes a) et b) sont réalisées en continu.

Eventuellement, et selon l'invention, la congélation de la substance d'enrobage autour des produits alimentaires peut n'être que partielle à l'issue de l'étape b), le procédé pouvant encore comprendre une étape c) supplémentaire où l'on apporte aux produits enrobés obtenus à l'étape b) des frigories extérieures jusqu'à obtenir la congélation totale de la substance d'enrobage.

La température initiale des produits à l'étape a) peut correspondre à un état congelé, par exemple de température comprise entre -20 °C et -10°C.

L'invention s'intéresse aux procédés d'enrobage pour lesquels les étapes a) et b) et le cas échéant l'étape c) sont réalisées de préférence en continu, et plus particulièrement encore aux procédés d'enrobage, à échelle industrielle, permettant d'atteindre des capacités de production importantes.

Par exemple le document EP 0.893.070 A1 décrit un tel procédé d'enrobage de produits alimentaires (des pâtes) avec un enrobage de sauce tomate, les pâtes subissant à l'étape a) une surgélation. L'étape b) est mise en œuvre dans un réservoir pourvu d'un système mécanisé assurant le brassage des produits alimentaires, la sauce tomate étant alors mise en contact avec les pâtes afin de les enrober, avec congélation de l'enrobage par l'action du transfert des frigories provenant des produits alimentaires. On connait encore du document EP.0.355.812 A1 un tel procédé d'enrobage de produits alimentaires, divulguant l'étape a), ainsi que l'étape b) alors mise en œuvre dans une enceinte de traitement pourvu d'un système mécanique de brassage des produits alimentaires.

L'invention s'intéresse plus particulièrement à l'étape b) qui a été mise en œuvre par la Demanderesse en phase de test dans une ligne de production présentant une unité d'enrobage et de mise en contact de la substance d'enrobage, comprenant une enceinte de traitement, et un système de brassage et d'avance à deux rotors contrarotatifs, permettant d'assurer le brassage des produits alimentaires dans l'enceinte de traitement : on alimente selon un débit (de préférence continu) la substance d'enrobage dans cette enceinte de traitement afin d'asperger les produits alimentaires sous-refroidis, en particulier en plusieurs points d'injection suivant une longueur d'enceinte de traitement définie. Le reste de cette longueur d'enceinte est dédiée à la finalisation du croûtage de la substance d'enrobage.

On alimente l'enceinte de traitement, et selon un débit déterminé avec les produits sous refroidis issus de l'étape a), au niveau d'au moins une ouverture d'alimentation de l'enceinte. On entraine les deux rotors contrarotatifs en rotation. Les rotors contrarotatifs ainsi entraînés permettent l'avance des produits alimentaires selon un temps de séjour déterminé dans l'enceinte de traitement: le long de leur trajet, les produits alimentaires sous refroidis sont aspergés avec la substance d'enrobage, et en vue d'obtenir la mise en contact de la substance d'enrobage avec les produits alimentaires, et le croûtage au moins partiel de la substance d'enrobage (sous l'action du transfert de frigories des produits alimentaires à la substance d'enrobage, et conformément à l'étape b).

La rotation des rotors permet encore de brasser les produits alimentaires. L'action de brassage du rotor permet d'assurer un mouvement relatif ininterrompu entre les produits alimentaires, et ainsi d'éviter leur agglomération sous le froid intense. Ce brassage permet encore de répartir la substance d'enrobage injectée dans l'enceinte de traitement sur toute la surface des produits alimentaires, et en vue de l'obtention d'un enrobage uniforme autour des produits alimentaires.

Un tel procédé d'enrobage a été testé lorsque l'unité d'enrobage et de mise en contact de la substance d'enrobage comprend deux rotors contrarotatifs, sensiblement juxtaposés et parallèles, chacun formé d'un arbre sensiblement cylindrique, et pourvu d'un ensemble d'organes sensiblement radiaux à l'arbre, répartis régulièrement suivant la longueur de l'arbre suivant une trajectoire hélicoïdale.

Un tel procédé d'enrobage continu s'est avéré satisfaisant lorsque les capacités de production étaient modestes, voire même moyennes ou encore lorsque la substance d'enrobage présentait certaines caractéristiques (taux d'enrobage faible, nature de la substance, teneur en matières sèches, teneur en matière grasse et sel).

En revanche, des problèmes de blocage sont apparus lorsque les capacités de production ont été augmentées et pour des temps d'ouverture de ligne significatifs, et/ou lorsque le taux de substance d'enrobage était important, typiquement supérieur à 10 % en masse par rapport aux produits alimentaires, et/ou lorsque la nature de la substance d'enrobage s'y prêtait, et/ou suivant sa teneur en matières sèches ou encore suivant sa teneur en matière grasse et sel : lors de la mise en œuvre d'un tel procédé on constate alors une accumulation progressive de la substance d'enrobage dans l'enceinte de traitement, passant par différents états rhéologiques/thermodynamiques pouvant aller jusqu'à la congélation et bloquer l'enceinte de l'unité au bout de quelques heures de production.

L'analyse de l'enceinte de traitement par les inventeurs a permis de découvrir que l'accumulation de substance d'enrobage se forme essentiellement sur les rotors, et en particulier des organes radiaux du rotor : la couche recouvre la surface périphérique en s'épaississant radialement, jusqu'à garnir l'inter-espace entre les deux rotors contrarotatifs. Dans un tel cas, les produits alimentaires ne peuvent plus circuler correctement entre les rotors ; le procédé est alors totalement bloqué.

Pour certaines substances d'enrobage, et même dans le cas de capacités de production relativement modestes, les inventeurs ont pu constater des inégalités dans la qualité de l'enrobage autour des produits alimentaires, à savoir que la substance d'enrobage croutée n'était pas uniformément répartie sur toute la surface des produits alimentaires.

Le but de la présente invention est de pallier les inconvénients précités en proposant un procédé d'enrobage de produits alimentaires qui, au moins selon un mode de réalisation, reste fiable, même lorsque les capacités de production sont importantes, quel que soit les temps d'ouvertures de la ligne d'enrobage et/ou le taux de la substance d'enrobage, et/ou sa teneur en matière sèche, ou encore sa teneur en matière grasse et sel.

Un autre but de la présente invention est de proposer, au moins selon un mode de réalisation, un procédé d'enrobage qui permet d'améliorer sensiblement la qualité de l'enrobage en permettant à la substance d'enrobage de couvrir uniformément toute la surface des produits alimentaires.

D'autres buts et avantages de la présente invention apparaitront au cours de la description qui va suivre qui n'est donnée qu'à titre indicatif et qui n'a pas pour but de la limiter.

Résumé de l'invention

La Demanderesse a réussi à inhiber le phénomène d'accumulation de substance d'enrobage sur les organes de brassage motorisés (i.e. les deux rotors contrarotatifs) par la mise en œuvre d'un chauffage maîtrisé lors de la mise en œuvre de l'étape b), avec un transfert par conduction des calories, et en particulier jusqu'aux organes radiaux des rotors.

On comprend que la mise en œuvre d'un tel chauffage est délicate et atypique en ce qu'il est nécessaire d'apporter à l'organe de brassage (i.e. les rotors) la quantité suffisante de chaleur pour empêcher cette accumulation sur l'organe, mais toutefois sans excès sous peine de ne plus obtenir la congélation (au moins partielle) de la substance d'enrobage qui doit résulter de l'étape b) par transfert des frigories depuis les produits alimentaires sous-refroidis vers la substance d'enrobage.

Une attention particulière est ainsi portée pour réguler l'intensité de chauffage suffisamment finement pour parvenir à cet objectif : dans le cas d'un chauffage électrique (résistif) il a été possible de réguler finement l'intensité de chauffage via une commande de puissance par «PWM» (de l'anglais «*Pulse Width Modulation*» qui peut être traduit en français par « *modulation à largeur d'impulsion* »). En diminuant le rapport cyclique de la commande PWM on diminue l'intensité de chauffage. Au contraire en augmentant le rapport cyclique de la commande PWM, on augmente l'intensité de chauffage.

Un tel chauffage maitrisé lors de la mise en œuvre de l'étape b) a permis d'éviter les problèmes de blocage de la ligne lorsque les capacités de production sont importantes, typiquement de l'ordre d'une tonne/heure de produits alimentaires enrobés (ou supérieures).

De manière inattendue, et même pour des capacités de production plus modestes (inférieure à 1 tonne/heure de produits enrobés) pour lesquelles les problèmes d'accumulation ne sont pas significatifs, les inventeurs ont constaté une amélioration sensible de la qualité de l'enrobage, à savoir une meilleure répartition de la substance d'enrobage autour des produits alimentaires et une diminution sensible des fines, et par comparaison à la mise en œuvre de l'étape b), sans chauffage.

Selon la compréhension actuelle des inventeurs, la mise en œuvre du chauffage maitrisé permet avantageusement de ralentir le temps nécessaire à la substance d'enrobage pour se figer et congeler. Sans chauffage et transfert de calorie à la substance d'enrobage, la congélation est bien souvent trop brutale pour que la substance d'enrobage ait le temps de recouvrir uniformément toute la surface des produits alimentaires.

Enoncé de l'invention

Aussi l'invention est relative à un procédé d'enrobage de produits alimentaires avec une substance d'enrobage comprenant :

- une étape a) de sous-refroidissement des produits alimentaires par apport de frigories extérieures à une température inférieure à leur température initiale, avant mise en contact des produits alimentaires et de la substance d'enrobage, et ultérieurement
- une étape b) de mise en contact des produits alimentaires sous-refroidis obtenus à l'étape a) et la substance d'enrobage, l'enrobage autour des produits étant formé à cette étape par la congélation de la dite substance d'enrobage uniquement sous l'action du transfert de frigories des produits alimentaires à la substance d'enrobage, c'est-à-dire sans apport de frigories extérieures

et dans lequel on réalise les étapes a) et b) de préférence en continu.

Selon l'invention, et à l'étape b) :

- on réalise la mise en contact des produits alimentaires sous-refroidis avec la substance d'enrobage dans une enceinte de traitement,
- on met en œuvre un brassage des produits alimentaires au moyen d'un système mécanisé motorisé, comprenant au moins un organe de brassage, interne à ladite enceinte de traitement, mobile par rapport à ladite enceinte de traitement,
- on chauffe ledit au moins organe de brassage, et on ajuste l'intensité du chauffage sans excès de manière à uniformiser la répartition de la substance d'enrobage autour des produits alimentaires et/ou à éviter l'accumulation de matières sur ledit organe de brassage, tout en assurant l'enrobage autour des produits alimentaires par congélation de la substance d'enrobage sous l'action du transfert de frigories des produits alimentaires à la substance d'enrobage.

Selon des caractéristiques optionnelles de l'invention, prises seules ou en combinaison :

- ledit au moins un organe de brassage est un rotor ; notamment ledit système mécanisé motorisé comporte deux organes de brassage constitués respectivement par deux rotors contrarotatifs, juxtaposés, sensiblement parallèles ;

- ledit au moins un rotor, le cas échéant chacun des deux rotors contrarotatifs, comprend des organes radiaux répartis le long du rotor et configurés de manière à assurer l'avance de la matière le long de ladite enceinte de traitement lors la mise en rotation du rotor, ou le cas échéant, les mises en rotation des rotors contrarotatifs ;

- le chauffage de l'organe de brassage est un chauffage électrique par induction, ou encore résistif ;

- le chauffage de l'organe de brassage est un chauffage électrique, et dans lequel on met en œuvre une commande de puissance à modulation de largeur d'impulsion, et on réalise l'étape d'ajustement de l'intensité de chauffage en modifiant le rapport cyclique de la commande de puissance à modulation de largeur d'impulsion ;

- le circuit électrique pour la mise en œuvre du chauffage électrique comporte, d'une part, au moins une partie embarquée avec le rotor, la partie embarquée présentant notamment une ou plusieurs résistances électriques, et d'autre part, une partie solidaire du bâti de l'enceinte de traitement, connectée à la source d'alimentation électrique, des contacts électriques glissants assurant la liaison électrique entre les deux parties du circuit électrique mobiles l'une par rapport à l'autre ;

- la congélation de la substance d'enrobage autour des produits alimentaires est partielle à l'issue de l'étape b), le procédé comportant une étape c) où l'on apporte aux produits enrobés obtenus à l'étape b) des frigories extérieures jusqu'à obtenir la congélation totale de la substance d'enrobage formant l'enrobage autour des produits alimentaires (sans injection de substance d'enrobage).

Selon un autre mode de réalisation, le chauffage de l'organe de brassage est obtenu par échange d'énergie thermique entre un fluide caloporteur et ledit organe de brassage. Dans un tel cas, l'organe de brassage, en particulier le ou les rotors sont pourvus de canalisations internes pour la circulation du fluide caloporteur. Dans un tel mode de chauffage, on peut réaliser l'étape d'ajustement de l'intensité de chauffage en augmentant ou en diminuant la température du fluide caloporteur, avant qu'il n'échange avec ledit organe de brassage, et/ou en augmentant ou en diminuant le débit de fluide caloporteur arrivant audit au moins un organe de brassage.

De manière générale, la température initiale des produits correspond à un état congelé, par exemple avec une température comprise entre -20°C et -10°C.

Selon un mode de réalisation, la température des produits alimentaires sous refroidis à l'issue de l'étape b) est comprise entre -65°C et -25°C et/ou la température de la substance d'enrobage avant mise en contact avec les produits sous refroidis est supérieure à 0°C, tel que par exemple à température ambiante.

De manière générale, on peut obtenir l'apport de frigories extérieures selon l'étape a) et/ou selon l'étape c) par injection d'un fluide cryogénique et mise en contact direct du fluide cryogénique avec les produits alimentaires de l'étape a), et/ou avec les produits alimentaires enrobés de l'étape c).

Le procédé selon l'invention trouve une application particulière sur une ligne de production pour des capacités de production supérieures à 1 tonne/heure, et de préférence à 2 tonnes/heure de produits alimentaires enrobés et afin d'éviter l'accumulation de matière sur ledit organe de brassage, voire même additionnellement d'améliorer sensiblement la répartition de la substance d'enrobage autour des produits alimentaires.

Le procédé selon l'invention trouve encore une application particulière, même sur des lignes de production de capacités plus modestes, inférieures à 1 tonne/heure, par exemple inférieures à 500kg/heure de produits alimentaires enrobés pour améliorer la qualité de l'enrobage, à savoir obtenir une meilleure répartition de la substance d'enrobage.

## Description des figures

L'invention sera mieux comprise à la lecture de la description accompagnée des dessins en annexe parmi lesquelles :

- La figure 1 est une vue d'une installation convenant pour la mise en œuvre du procédé d'enrobage selon l'invention,
- La figure 2 est une vue de dessus de l'unité d'enrobage et de mise en contact de la substance d'enrobage de l'installation de la figure 1, qui comporte un système d'avance et de brassage à deux rotors contrarotatifs,
- La figure 3 est une vue schématique de l'arbre d'un rotor du système d'avance de la figure 2, qui comporte en son sein un circuit électrique de chauffage avec un ensemble de résistances électriques,
- La figure 4 est un graphique de la tension électrique par rapport au temps, illustrant la commande de puissance du circuit électrique par modulation à largeur d'impulsion.

## Description détaillée

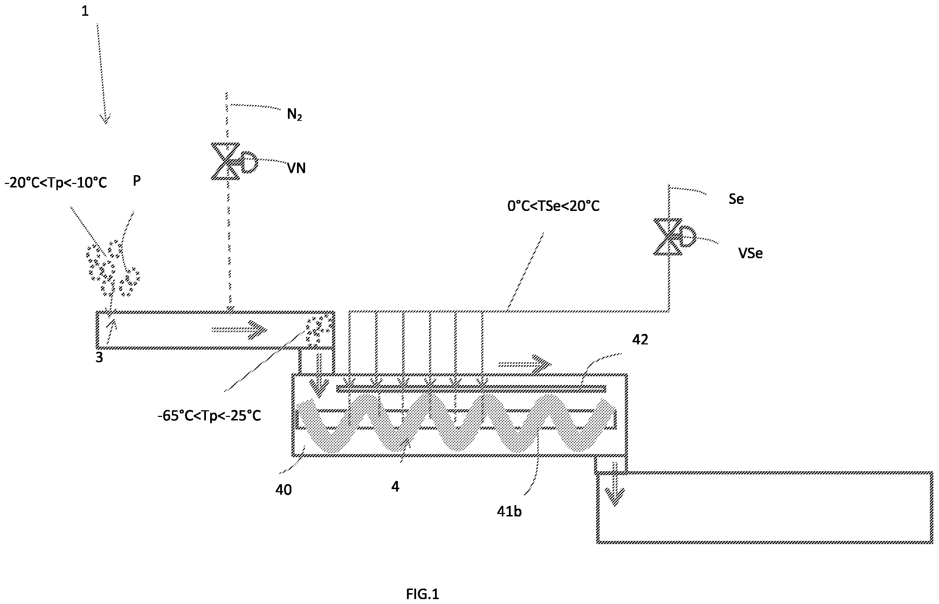

Aussi, la figure 1 illustre (à titre d'exemple non limitatif) une installation d'enrobage 1 convenant pour la mise en œuvre du procédé d'enrobage de produits alimentaires P avec une substance d'enrobage Se, selon l'invention avec mise en œuvre des étapes a) et b) telles que précédemment décrites. Cette installation 1 comporte successivement, selon le sens de traitement des produits, une unité 3 de sous-refroidissement, et une unité 4 d'enrobage et de mise en contact de la substance d'enrobage.

Les produits alimentaires P sont alimentés en continu (ou en discontinu) dans l'unité 3 de sous-refroidissement.

Le sous-refroidissement de l'étape a) est obtenu par apport de frigories extérieures sur les produits alimentaires P, avec injection de fluide cryogénique (par exemple de l'azote liquide ou du $CO_2$) dans l'unité de sous-refroidissement 3 en un ou plusieurs points d'injection.

On règle le débit de fluide cryogénique afin d'obtenir la température déterminée (par exemple -35°C) des produits sous refroidis à l'issue de l'étape a) qui est supérieure à -65°C et inférieure à -25°C, au niveau de la sortie de l'unité 3 de sous-refroidissement. Ce réglage peut être mis en œuvre au moyen d'une vanne $V_N$ « proportionnelle »

Les produits sous-refroidis, issus de l'étape a) alimentent en continu (ou en discontinu) l'entrée de l'unité 4 d'enrobage et de mise en contact de la substance d'enrobage, notamment par gravité.

Cette unité 4 d'enrobage permet la mise en œuvre de l'étape b) du procédé d'enrobage, et comprend à cet effet :

- une enceinte de traitement 40, formant un berceau pour un système d'avance et de brassage,
- le système d'avance et de brassage qui comprend deux rotors contrarotatifs 41a, 41b,
- un système d'injection 42 de la substance d'enrobage Se dans l'enceinte de traitement 40 de longueur définie,
- une longueur de l'enceinte (successive au système d'injection 42) afin de permettre le croûtage de la substance d'enrobage Se, c'est-à-dire sans injection de substance d'enrobage.

Chacun des rotors comprend un arbre 43, notamment sensiblement cylindrique, le long duquel sont répartis des organes 44, sensiblement radiaux. Ces organes 44 sont répartis suivant la longueur de l'arbre selon une trajectoire hélicoïdale, et de manière rapprochée les uns des autres. Lors de la rotation du rotor 41a ou 41b, les organes 44 permettent de brasser les produits alimentaires P. Leur agencement permet encore de pousser les produits, et de manière similaire à une vis d'Archimède.

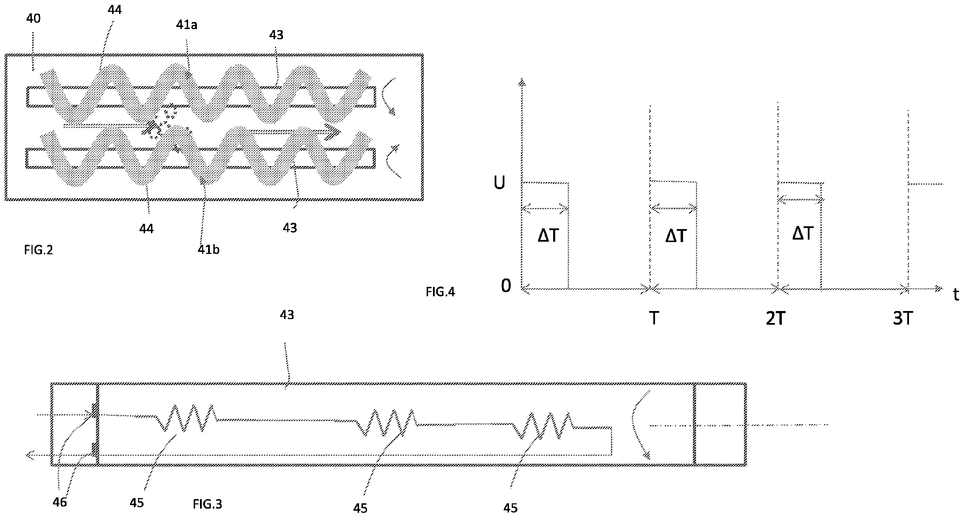

En entraînant les rotors 41a et 41b en des sens opposés, il est possible de provoquer l'avance des produits alimentaires P le long de l'enceinte de traitement 40, depuis l'entrée et jusqu'à une sortie, et comme illustré par la double flèche de la figure 2.

Sur la première partie du trajet, on injecte en continu la substance d'enrobage Se, en plusieurs points d'injection le long de l'enceinte 40 de traitement par l'intermédiaire du système 42. La substance d'enrobage peut être à température ambiante, mais dans tous les cas supérieure à 0°C. Le débit de la substance d'enrobage Se peut être réglé par une vanne $V_{Se}$, à commande proportionnelle, fonction du taux de substance d'enrobage Se souhaité et du débit des produits alimentaires P. La substance d'enrobage Se entre en contact avec les produits alimentaires sous-refroidis dans l'enceinte 40 : l'enrobage est alors croûté au moins partiellement par transfert de frigories des produits alimentaires à la substance d'enrobage, c'est-à-dire sans apport de frigorie extérieure (*i.e.* sans injection de fluide cryogénique dans l'enceinte 40) et ce sur la longueur de l'enceinte 40 laissée libre du système 42.

## Chauffage des rotors

De manière notable, et selon l'invention, et lors de la mise en œuvre de l'étape b) on chauffe positivement les rotors 41a et 41b afin de limiter le transfert de frigories sur l'arbre 43 et les organes 44 des rotors 41a et 41b.

On apporte ainsi la quantité suffisante d'énergie nécessaire pour arrêter l'accumulation de la substance d'enrobage Se sur les rotors 41a et 41b, et leurs organes radiaux 44 et/ou encore pour ralentir la congélation de la substance d'enrobage, mais toutefois sans excès sous peine de ne plus obtenir la congélation (au moins partielle) de la substance d'enrobage qui doit résulter de l'étape b).

Une attention particulière est ainsi portée pour réguler l'intensité de chauffage suffisamment finement pour parvenir à cet objectif : dans le cas d'un chauffage électrique (résistif) il a été possible de régler finement l'intensité de chauffage par une commande de puissance par «*PWM*» (de l'anglais «*Pulse Width Modulation*» qui peut être traduit en français par « *modulation à largeur d'impulsion* »).

Une telle commande est illustrée par le graphique de la figure 4 qui illustre cette commande de puissance et plus particulièrement la tension U par rapport au temps. On commande le chauffage par impulsion de tension de largeur $\Delta T$, à chaque période de temps T. Le rapport cyclique $\alpha$ (en pourcentage) est de

$$\alpha = \frac{100 \times \Delta T}{T} .$$

En diminuant le rapport cyclique $\alpha$ de la commande PWM on diminue l'intensité de chauffage. En augmentant le rapport cyclique $\alpha$ de la commande PWM, on augmente l'intensité de chauffage. Ce rapport cyclique est ajusté à chaque campagne de production afin d'inhiber l'accumulation de la substance d'enrobage Se, et sans excès comme expliqué précédemment. La figure 4 illustre le circuit de chauffage électrique interne à l'arbre 43 de chaque rotor 41a ou 41b qui comprend un ensemble de résistances électriques 45, montées tournantes avec l'arbre 43 du rotor. Le circuit électrique comprend des contacts électriques glissants 46, entre la partie tournante du circuit embarquée à l'arbre 43, et la partie fixe du circuit connectée à la source d'alimentation électrique.

### NOMENCLATURE

1. Installation d'enrobage,
3. Unité de sous-refroidissement,
4. Unité d'enrobage et de mise en contact de la substance d'enrobage,
40. Enceinte de traitement,
41a, 41b. Rotors contra-rotatifs,
42. Système d'injection de la substance d'enrobage,
43. Arbres (rotors),
44. Organes radiaux (rotors),
45. Résistances électriques (chauffage rotor),
46. Contacts électriques glissants.
$N_2$. Liquide cryogénique,
Se. Substance d'enrobage,
P. Produits alimentaires,

Tp. Température des produits alimentaires,
$V_N$. Vanne de réglage de débit du fluide cryogénique,
$V_{Se}$. Vanne de réglage de débit de la substance d'enrobage,
U. Tension d'alimentation des circuits électriques de chauffage internes aux rotors.

### Revendications

1. Procédé d'enrobage de produits alimentaires avec une substance d'enrobage comprenant :

   - une étape a) de sous-refroidissement des produits alimentaires par apport de frigories extérieures à une température inférieure à leur température initiale, avant mise en contact des produits alimentaires et de la substance d'enrobage, et ultérieurement
   - une étape b) de mise en contact des produits alimentaires sous-refroidis obtenus à l'étape a) et la substance d'enrobage, l'enrobage autour des produits étant formé à cette étape par la congélation de la dite substance d'enrobage uniquement sous l'action du transfert de frigories des produits alimentaires à la substance d'enrobage, c'est-à-dire sans apport de frigories extérieures,
   **caractérisé en ce que** à l'étape b):

   - on réalise la mise en contact des produits alimentaires sous-refroidis avec la substance d'enrobage dans une enceinte de traitement (40),
   - on met en œuvre un brassage des produits alimentaires au moyen d'un système mécanisé motorisé, comprenant au moins un organe de brassage, interne à ladite enceinte de traitement (40), mobile par rapport à ladite enceinte de traitement (40),
   - on chauffe ledit au moins organe de brassage, et on ajuste l'intensité du chauffage sans excès de manière à uniformiser la répartition de la substance d'enrobage autour des produits alimentaires et/ou à éviter l'accumulation de matières sur ledit organe de brassage, tout en assurant l'enrobage autour des produits alimentaires par la congélation de la substance d'enrobage sous l'action du transfert de frigories des produits alimentaires à la substance d'enrobage.

2. Procédé selon la revendication 1, dans lequel ledit au moins un organe de brassage est un rotor.

3. Procédé selon la revendication 1, dans lequel ledit système mécanisé motorisé comporte deux organes de brassage constitués par deux rotors (41a, 41b) contrarotatifs, juxtaposés.

**4.** Procédé selon la revendication 2 ou la revendication 3, dans lequel ledit au moins un rotor, le cas échéant chacun des deux rotors (41a, 41b) contrarotatifs, comprend des organes radiaux (44) répartis le long du rotor et configurés de manière à assurer l'avance de la matière le long de ladite enceinte de traitement (40) lors de la mise en rotation du rotor, ou le cas échéant lors des mises en rotation des rotors (41a, 41b) contrarotatifs.

**5.** Procédé selon l'une des revendications 1 à 4, dans lequel le chauffage de l'organe de brassage est un chauffage électrique par induction, ou encore résistif.

**6.** Procédé selon la revendication 5, dans lequel le chauffage de l'organe de brassage est un chauffage électrique, et dans lequel on met en œuvre une commande de puissance à modulation de largeur d'impulsion, et on réalise l'étape d'ajustement de l'intensité de chauffage en modifiant le rapport cyclique de la commande de puissance à modulation de largeur d'impulsion.

**7.** Procédé selon la revendication 2, 3, ou 4 prise en combinaison avec la revendication 5 ou 6, dans lequel le circuit électrique pour la mise en œuvre du chauffage électrique comporte, d'une part, au moins une partie embarquée avec le rotor (41a ; 41b), la partie embarquée présentant notamment une ou plusieurs résistances électriques (45), et d'autre part, une partie solidaire du bâti de l'enceinte de traitement, connectée à la source d'alimentation électrique, des contacts électriques glissants (46) assurant la liaison électrique entre les deux parties du circuit électrique mobiles l'une par rapport à l'autre.

**8.** Procédé selon l'une des revendications 1 à 7, dans lequel la congélation de la substance d'enrobage autour des produits alimentaires est partielle à l'issue de l'étape b), le procédé comportant une étape c) où l'on apporte aux produits enrobés obtenus à l'étape b) des frigories extérieures jusqu'à obtenir la congélation totale de la substance d'enrobage formant enrobage autour des produits alimentaires.

**9.** Procédé selon la revendication 1 ou 8, dans lequel le chauffage de l'organe de brassage est obtenu par échange d'énergie thermique entre un fluide caloporteur et ledit organe de brassage.

**10.** Procédé selon la revendication 9, dans lequel on réalise l'étape d'ajustement de l'intensité de chauffage en augmentant ou en diminuant la température du fluide caloporteur, avant qu'il n'échange avec ledit organe de brassage, et/ou en augmentant ou en diminuant le débit de fluide caloporteur arrivant audit au moins un organe de brassage.

**11.** Procédé selon l'une des revendications 1 à 10, dans lequel la température initiale des produits correspond à un état congelé, par exemple comprise entre -20°C et -10°C.

**12.** Procédé selon l'une des revendications 1 à 11, dans lequel la température des produits alimentaires sous refroidis à l'issue de l'étape b) est comprise entre -65°C et -25°C et dans lequel la température de la substance d'enrobage avant mise en contact avec les produits sous refroidis est supérieure à 0°C, tel que par exemple à température ambiante.

**13.** Procédé selon l'une des revendications 1 à 12, dans lequel on réalise l'apport de frigories extérieures de l'étape a) et/ou de l'étape c) par injection d'un fluide cryogénique et mise en contact direct du fluide cryogénique avec les produits alimentaires de l'étape a), et/ou avec les produits alimentaires enrobés de l'étape c).

**14.** Procédé selon l'une des revendications 1 à 13, pour des capacités de production supérieures à 1 tonne/heure de produits alimentaires enrobés, par exemple supérieures à 2 tonnes/heure et pour lequel on chauffe ledit au moins organe de brassage, et on ajuste l'intensité du chauffage sans excès au moins de manière à éviter l'accumulation de matières sur ledit organe de brassage.

**15.** Procédé selon l'une des revendications 1 à 13, pour des capacités de production inférieures à 1 tonne/heure de produits alimentaires enrobés, par exemple inférieures à 500 kg par heure et pour lequel on chauffe ledit au moins organe de brassage, et on ajuste l'intensité du chauffage sans excès au moins de manière à uniformiser la répartition de la substance d'enrobage autour des produits alimentaires.

**16.** Procédé selon l'une des revendications 1 à 15, dans lequel les produits alimentaires sont choisis parmi :

- les légumes,
- les légumineuses,
- la viande,
- les céréales,
- les fruits,
- le poisson.

**17.** Procédé selon l'une des revendications 1 à 16, dans lequel les étapes a) et b), voire le cas échéant c) sont réalisées en continu.

**Patentansprüche**

1. Verfahren zur Beschichtung von Nahrungsmittelprodukten mit einer Beschichtungssubstanz, umfassend:

   - einen Schritt a) des Unterkühlens der Nahrungsmittelprodukte durch Zufuhr externer Kältemittel bei einer Temperatur unter ihrer Ausgangstemperatur vor Inkontaktbringen der Nahrungsmittelprodukte und der Beschichtungssubstanz, und später
   - einen Schritt b) des Inkontaktbringens der in Schritt a) erhaltenen unterkühlten Nahrungsmittelprodukte und der Beschichtungssubstanz, wobei die Beschichtung um die Produkte in diesem Schritt durch Gefrieren der Beschichtungssubstanz nur unter der Wirkung des Transfers von Kältemitteln von den Nahrungsmittelprodukten auf die Beschichtungssubstanz, d.h. ohne Zufuhr externer Kältemittel, gebildet wird, **dadurch gekennzeichnet, dass** in Schritt b):

     - das Inkontaktbringen der unterkühlten Nahrungsmittelprodukte mit der Beschichtungssubstanz in einem Behandlungsraum (40) durchgeführt wird,
     - ein Mischen der Nahrungsmittelprodukte mit Hilfe eines motorbetriebenen mechanisierten Systems, umfassend mindestens ein Rührelement im Inneren des Behandlungsraums (40), das in Bezug zum Behandlungsraum (40) beweglich ist, durchgeführt wird,
     - das mindestens eine Rührmittel erwärmt wird, und die Stärke der Erwärmung moderat eingestellt wird, um die Verteilung der Beschichtungssubstanz um die Nahrungsmittelprodukte einheitlich zu gestalten und/oder um die Anhäufung von Material auf dem Rührmittel zu vermeiden, wobei die Beschichtung um die Nahrungsmittelprodukte durch das Gefrieren der Beschichtungssubstanz unter der Wirkung des Transfers von Kältemitteln von den Nahrungsmittelprodukten zu der Beschichtungssubstanz gewährleistet wird.

2. Verfahren nach Anspruch 1, bei dem das mindestens eine Rührmittel ein Rotor ist.

3. Verfahren nach Anspruch 1, bei dem das motorbetriebene mechanisierte System zwei Rührelemente umfasst, die von zwei nebeneinander angeordneten gegenläufigen Rotoren (41a, 41b) gebildet sind.

4. Verfahren nach Anspruch 2 oder Anspruch 3, bei dem der mindestens eine Rotor, gegebenenfalls jeder der zwei gegenläufigen Rotoren (41a, 41b), radiale Elemente (44) umfasst, die entlang des Rotors verteilt und eingerichtet sind, um den Vorschub des Materials entlang des Behandlungsraums (40) beim Inkontaktbringen des Rotors oder gegebenenfalls beim Versetzen der gegenläufigen Rotoren (41a, 41b) in Drehung zu gewährleisten.

5. Verfahren nach einem der Ansprüche 1 bis 4, bei dem die Erwärmung des Rührmittels eine elektrische Erwärmung durch Induktion oder auch durch Widerstand ist.

6. Verfahren nach Anspruch 5, bei dem die Erwärmung des Rührelements eine elektrische Erwärmung ist, und bei dem eine Leistungssteuerung mit Impulsbreitenmodulation eingesetzt wird, und der Schritt der Einstellung der Stärke der Erwärmung durchgeführt wird, wobei das zyklische Verhältnis der Leistungssteuerung mit Impulsbreitenmodulation verändert wird.

7. Verfahren nach Anspruch 2, 3 oder 4 in Kombination mit dem Anspruch 5 oder 6, bei dem die elektrische Schaltung für den Einsatz der elektrischen Heizung einerseits mindestens ein mit dem Rotor (41a; 41b) eingebautes Teil umfasst, wobei das Teil insbesondere einen oder mehrere elektrische Widerstände (45) aufweist, und andererseits ein mit dem Gehäuse des Behandlungsraums verbundenes Teil umfasst, das an die elektrische Versorgungsquelle angeschlossen ist, wobei elektrische Gleitkontakte (46) die elektrische Verbindung zwischen den zwei Teilen der elektrischen Schaltung, die zueinander beweglich sind, gewährleisten.

8. Verfahren nach einem der Ansprüche 1 bis 7, bei dem das Gefrieren der Beschichtungssubstanz um die Nahrungsmittelprodukte nach dem Schritt b) teilweise ist, wobei das Verfahren einen Schritt c) umfasst, in dem den in Schritt b) erhaltenen beschichteten Produkten externe Kältemittel zugeführt werden, bis das vollständige Gefrieren der Beschichtungssubstanz, die die Beschichtung um die Nahrungsmittelprodukte bildet, erreicht ist.

9. Verfahren nach Anspruch 1 oder 8, bei dem das Erwärmen des Rührelements durch Wärmeenergieaustausch zwischen einer Wärmeträgerflüssigkeit und dem Rührelement erfolgt.

10. Verfahren nach Anspruch 9, bei dem der Schritt der Anpassung der Stärke der Erwärmung durch Erhöhung oder Verringerung der Temperatur der Wärmeträgerflüssigkeit, bevor sie sich mit dem Rührelement austauscht, und/oder durch Erhöhung oder Verringerung der Menge an Wärmeträgerflüssigkeit, die an dem mindestens einen Rührelement ankommt, erfolgt.

11. Verfahren nach einem der Ansprüche 1 bis 10, bei dem die Ausgangstemperatur der Produkte einen gefrorenen Zustand, beispielsweise zwischen -20°C und -10°C, entspricht.

12. Verfahren nach einem der Ansprüche 1 bis 11, bei dem die Temperatur der unterkühlten Nahrungsmittelprodukte nach dem Schritt b) zwischen -65°C und -25°C beträgt, und bei dem die Temperatur der Beschichtungssubstanz vor Inkontaktbringen mit den unterkühlten Produkten höher als 0°C ist, beispielsweise bei Raumtemperatur liegt.

13. Verfahren nach einem der Ansprüche 1 bis 12, bei dem die Zufuhr von externen Kältemitteln das Schritts a) und/oder des Schritts c) durch Einspritzen eines kryogenen Fluids und direktes Inkontaktbringen des kryogenen Fluids mit den Nahrungsmittelprodukten des Schritts a) und/oder mit den beschichteten Nahrungsmittelprodukten des Schritts c) erfolgt.

14. Verfahren nach einem der Ansprüche 1 bis 13 für Produktionskapazitäten über 1 Tonne/Stunde von beschichteten Nahrungsmittelprodukten, beispielsweise über 2 Tonnen/Stunde, und bei dem das mindestens eine Rührmittel erwärmt und die Stärke der moderaten Erwärmung zumindest so eingestellt wird, dass die Anhäufung von Materialien auf dem Rührmittel vermieden wird.

15. Verfahren nach einem der Ansprüche 1 bis 13, für Produktionskapazitäten unter 1 Tonne/Stunde von beschichteten Nahrungsmittelprodukten, beispielsweise unter 500 kg/Stunde, und bei dem das mindestens eine Rührmittel erwärmt und die Stärke der moderaten Erwärmung zumindest so eingestellt wird, dass die Verteilung der Beschichtungssubstanz um die Nahrungsmittelprodukte einheitlich ist.

16. Verfahren nach einem der Ansprüche 1 bis 15, bei dem die Nahrungsmittelprodukte ausgewählt sind unter:

- Gemüse,
- Hülsenfrüchten,
- Fleisch,
- Getreide,
- Obst,
- Fisch.

17. Verfahren nach einem der Ansprüche 1 bis 16, bei dem die Schritte a) und b) bzw. gegebenenfalls c) kontinuierlich durchgeführt werden.

**Claims**

1. A method for coating food products with a coating substance, comprising:

- a step a) of supercooling the food products, by providing external frigories, to a temperature lower than the initial temperature of same, before contacting the food products with the coating substance, and subsequently
- a step b) of contacting the supercooled food products obtained in step a) with the coating substance, the coating around the products being formed at this step by the freezing of said coating substance under only the action of the transfer of frigories from the food products to the coating substance, in other words without providing external frigories,
**characterised in that** in step b):

- the supercooled food products are contacted with the coating substance in a treatment chamber (40),
- the food products are stirred by means of a motorised mechanised system, comprising at least one stirring member, internal to said treatment chamber (40), movable with respect to said treatment chamber (40),
- said at least one stirring member is heated, and the intensity of the heating is adjusted without excess heating, so that the distribution of the coating substance around the food products is made uniform and/or to avoid the accumulation of material on said stirring member, while ensuring the coating around the food products by the freezing of the coating substance under the action of the transfer of frigories from the food products to the coating substance.

2. Method according to claim 1, wherein said at least one stirring member is a rotor.

3. Method according to claim 1, wherein said motorised mechanised system comprises two stirring members formed by two juxtaposed contrarotating rotors (41a, 41b).

4. Method according to claim 2 or claim 3, wherein said at least one rotor, where necessary each of the two contrarotating rotors (41a, 41b), comprises radial members (44) distributed along the rotor and configured so as to ensure the advance of the material along said treatment chamber (40) during rotating of the rotor or, if necessary, during rotating of the contrarotating rotors (41a, 41b).

5. Method according to one of claims 1 to 4, wherein the heating of the stirring member is electrical induction heating or resistive heating.

6. Method according to claim 5, wherein the heating of the stirring member is an electrical heating and wherein the power is controlled by pulse-width modulation, and the step of adjusting the intensity of heating is carried out by modifying the duty cycle of the pulse-width modulation power control.

7. Method according to claim 2, 3, or 4 in combination with claim 5 or 6, wherein the electrical circuit for implementing the electrical heating comprises at least one portion embarked on the rotor (41a; 41b), the embarked portion having, in particular, one or more electrical resistances (45), and a portion rigidly attached to the frame of the treatment chamber, connected to the electrical power source, sliding electrical contacts (46) ensuring the electrical connection between the two portions of the electrical circuit, which can move with respect to one another.

8. Method according to one of claims 1 to 7, wherein the freezing of the coating substance around the food products is partial at the end of step b), the method comprising a step c) where the coated products obtained in step b) are provided with external frigories until total freezing of the coating substance is obtained forming the coating around the food products.

9. Method according to claim 1 or 8, wherein the heating of the stirring member is obtained by heat exchange between a heat transfer fluid and said stirring member.

10. Method according to claim 9, wherein a step of adjusting the intensity of heating is carried out by increasing or reducing the temperature of the heat transfer fluid, before it exchanges heat with said stirring member, and/or increasing or reducing the flow rate of heat transfer fluid arriving at said at least one stirring member.

11. Method according to one of claims 1 to 10, wherein the initial temperature of the products corresponds to a frozen state, for example being between -20°C and -10°C.

12. Method according to one of claims 1 to 11, wherein the temperature of the supercooled food products at the end of step b) is between -65°C and -25°C and wherein the temperature of the coating substance before being contacted with the supercooled products is greater than 0°C, such as for example at ambient temperature.

13. Method according to one of claims 1 to 12, wherein the provision of external frigories in step a) and/or step c) is carried out by injection of a cryogenic fluid and the cryogenic fluid is directly contacted with the food products of step a), and/or with the coated food products of step c).

14. Method according to one of claims 1 to 13, for production capacities greater than 1 tonne/hour of coated food products, for example greater than 2 tonnes/hour, and for which said at least one stirring member is heated, and the intensity of the heating is adjusted, without excess heating, at least so as to avoid the accumulation of material on said stirring member.

15. Method according to one of claims 1 to 13, for production capacities less than 1 tonne/hour of coated food products, for example less than 500 kg per hour, and for which said at least one stirring member is heated, and the intensity of the heating is adjusted, without excess heating, at least so that the distribution of the coating substance around the food products is uniform.

16. Method according to one of claims 1 to 15, wherein the food products are chosen among:

- vegetables,
- legumes,
- meat,
- cereals,
- fruits,
- fish.

17. Method according to one of claims 1 to 16, wherein steps a) and b), or even if necessary, c) are carried out continuously.

FIG.1

40 44 41a 43

FIG.2

44 41b 43

43

FIG.4

U

ΔT ΔT ΔT

0 T 2T 3T t

46 45 FIG.3 45 45

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2789270 A1
- EP 0893070 A1
- EP 0355812 A1